# EUROPÄISCHE PATENTANMELDUNG

(11) **EP 1 795 422 A1**
(43) Veröffentlichungstag der Anmeldung: **13.06.2007**
(21) Anmeldenummer: 06022443.3
(22) Anmeldetag: 26.10.2006
(51) Int. Cl.: B60T 13/08

(54) **Auflaufbremsanlage für Kraftfahrzeuganhänger mit Wegmesseinrichtung für Zugstange**

(30) Priorität: 08.12.2005 DE 202005019223 U
(71) Anmelder: Knott GmbH, D-83125 Eggstätt (DE)
(72) Erfinder: Knott, Valentin, 83254 Breitbrunn am Chiemsee (DE); Strasser, Josef, 83257 Gstadt am Chiemsee (DE)
(74) Vertreter: Bauer, Friedrich

(57) **Zusammenfassung**

Bei einer Auflaufbremsanlage für Kraftfahrzeuganhänger ist zwischen der Zugstange (2) und dem Zugstangenführungsstück (3) eine Wegmesseinrichtung (8) vorgesehen, welche die bei einem Bremsvorgang auftretende Relativverschiebung zwischen Zugstange (2) und Zugstangenführungsstück (3) erfasst und mit einer elektrischen Steuereinrichtung (11) zum Betätigungen der Radbremsen in Abhängigkeit der Relativverschiebung verbunden ist. Da die Wegmesseinrichtung (8) nicht die Kraft, sondern einen Verschiebeweg misst, wird die Wegmesseinrichtung (8) nicht von störenden Querkräften beeinflusst.

## Beschreibung

Die Erfindung betrifft eine Auflaufbremsanlage für Kraftfahrzeuganhänger mit einer an einem Zugfahrzeug ankuppelbaren Zugstange, einem mit einem Anhängerfahrgestell verbundenden Zugstangenführungsstück, in dem die Zugstange längs verschiebbar geführt ist, und einer zwischen der Zugstange und dem Zugstangenführungsstück wirkenden Federeinrichtung zur federnden Abstützung der Zugstange am Zugstangenführungsstück.

Bei Auflaufbremsanlagen dieser Art wird bekannterweise die Relativverschiebung von Zugstange und Zugstangenführungsstück bei einem Bremsvorgang für die Betätigung der Radbremsen verwendet. Dies kann beispielsweise dadurch erfolgen, dass die Zugstange mit einem Hydraulikkolben zusammenwirkt, welcher beim Einschieben der Zugstange in das Zugstangenführungsstück den Hydraulikdruck in den Bremsleitungen erhöht. Weiterhin kann die Relativbewegung zwischen Zugstange und Zugstangenführungsstück auch auf mechanische Weise an die Radbremsen übertragen werden.

Ferner ist es bekannt, bei starren Anhängerdeichseln Dehnmessstreifen vorzusehen, die Teil einer Kraftmessanordnung sind und die beim Abbremsen auf die Deichsel wirkenden Kräfte messen, so dass die Radbremsen entsprechend der von den Dehnmessstreifen abgegebenen und von einer Verstärkungs- und Verstärkerschaltung aufbereiteten elektrischen Signale angesteuert werden können. Bei derartigen Bremsanlagen können jedoch teilweise erhebliche Kraftspitzen auftreten, da zwischen dem Auftreten der Kraft im Zugstangenbereich, der messtechnischen Erfassung, der Verarbeitung und dem entsprechenden Ansprechen der Radbremse eine gewisse Zeitspanne verstreicht. Weiterhin können die von den Dehnmessstreifen abgegebenen Messsignale durch Querkräfte, welche durch dynamische Stützlasten verursacht werden, erheblich verfälscht werden.

Der Erfindung liegt die Aufgabe zugrunde, eine Auflaufbremsanlage der eingangs genannten Art zu schaffen, welche bei einfachem Aufbau ein verbessertes Bremsverhalten zeigt.

Diese Aufgabe wird erfindungsgemäß durch eine Auflaufbremsanlage mit den Merkmalen des Anspruchs 1 gelöst. Vorteilhafte Ausführungsformen der Erfindung sind in den weiteren Ansprüchen beschrieben.

Bei der erfindungsgemäßen Auflaufbremsanlage ist zwischen der Zugstange und dem Zugstangenführungsstück eine Wegmesseinrichtung vorgesehen, welche die bei einem Bremsvorgang auftretende Relativverschiebung zwischen Zugstange und Zugstangenführungsstück erfasst und mit eine elektrischen Steuereinrichtung zum Betätigen der Radbremsen in Abhängigkeit der Relativverschiebung verbunden ist.

Bei der erfindungsgemäßen Auflaufbremsanlage wird somit zunächst nicht die Kraft, sondern der Weg gemessen, der bei einem Bremsvorgang von der Zugstange relativ zum Zugstangenführungsstück zurückgelegt wird. Aus dem Wegesignal und der bekannten Kraft-Weg-Kennlinie der Federeinrichtung kann die Steuereinrichtung dann die auftretenden Kräfte bestimmen und entsprechende Ausgangssignale abgeben, um die Radbremsen in geeigneter Weise, z.B. elektrisch oder hydraulisch, abzubremsen. Auch unter höchster Last wird eine derartige Wegmesseinrichtung von störenden Querkräften nicht beeinflusst. Da die erfindungsgemäße Wegmesseinrichtung bei gefederten Anhängerdeichseln verwendet wird, können auch die bei starren Anhängerdeichseln üblichen Kraftspitzen vermieden werden.

Eine einfache und kostengünstig herzustellende Ausführungsform ergibt sich, wenn die Wegmesseinrichtung einerseits an einem Zugstangenanschlag, an dem die Federeinrichtung abgestützt ist, und andererseits am Zugstangenführungsstück befestigt ist.

Zweckmäßigerweise umfasst die Wegmesseinrichtung einen an der Zugstange befestigten Stab und eine am Zugstangenführungsstück befestigte Stabpositionserkennungseinrichtung.

Gemäß einer vorteilhaften Ausführungsform ist die Zugstange im Zugstangenführungsstück innerhalb bestimmter Grenzen drehbar geführt. Hierdurch können die auf die Zugkugelkupplung übertragenen Kräfte verringert werden, wenn sich der Kraftfahrzeuganhänger in einer Schräglage relativ zum Zugfahrzeug befindet. Die Funktion der erfindungsgemäßen Wegmesseinrichtung wird hierdurch nicht beeinträchtigt.

Gemäß einer vorteilhaften Ausführungsform ist an der Zugstange im Bereich hinter dem Zugstangenführungsstück ein hinterer Anschlag zur Abstützung einer Feder befestigt, die zwischen dem Zugstangenführungsstück und dem hinteren Anschlag angeordnet ist, wobei der hintere Anschlag mit einem relativ zum Zugstangenführungsteil feststehenden Deichselgehäuseteil zur Begrenzung der Drehung der Zugstange zusammenwirkt. Die hintere Feder dämpft die bei einem harten Anreißen der Zugstange auf das Anhängergestell wirkenden Kräfte. Weiterhin ergibt sich eine sehr einfache Anordnung, da der hintere Anschlag, der zum Abstützen der hinteren Feder dient, gleichzeitig als Anschlag ausgebildet ist, der die Drehbewegung der Zugstange relativ zum Deichselgehäuseteil begrenzt.

Die Erfindung wird nachfolgend anhand der Zeichnungen beispielhaft näher erläutert. Es zeigen:
- Figur 1:: einen teilweise schematisch dargestellten Längsschnitt durch den vorderen Teil der erfindungsgemäßen Auflaufbremsanlage,
- Figur 2:: eine Darstellung gemäß Figur 1, wobei die Auflaufbremsanlage während eines Bremsvorgangs dargestellt ist,
- Figur 3:: eine teilweise schematisch dargestellte Rückansicht der Auflaufbremsanlage der Figuren 1 und 2, und
- Figur 4:: eine Darstellung gemäß Figur 3, wobei eine Drehung der Zugstange relativ zu einem Deichselgehäuseteil veranschaulicht ist.

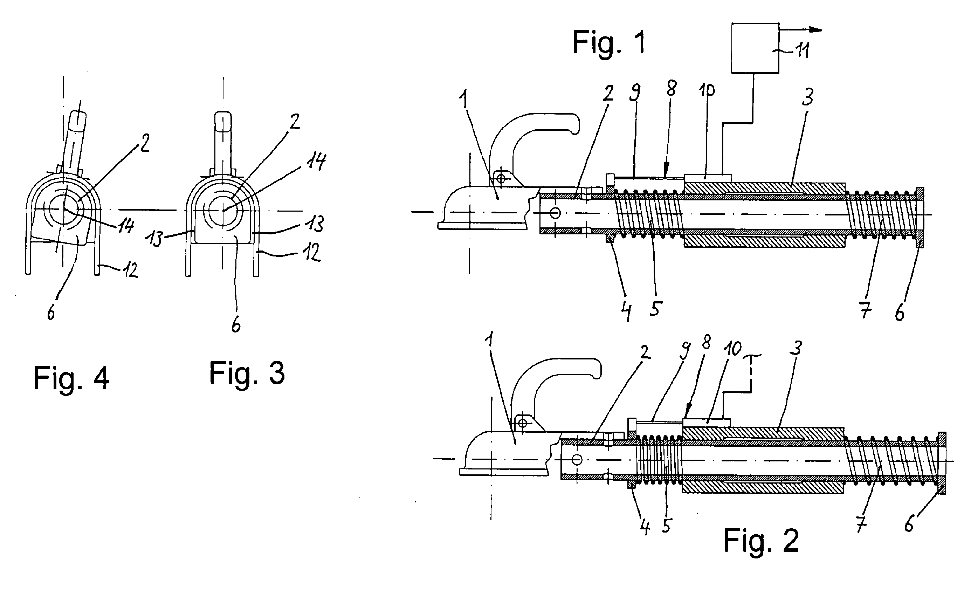

Aus den Figuren 1 und 2 ist der vordere Teil einer Anhängerdeichsel mit Auflaufbremsanlage ersichtlich, die eine an einer Zugkugelkupplung 1 befestigte, rohrförmige Zugstange 2 sowie ein hülsenartiges Zugstangenführungsstück 3 aufweist, in dem die Zugstange 2 längs verschiebbar und drehbar geführt ist. Das Zugstangenführungsstück 3 ist Teil desjenigen Deichselabschnitts, der fest mit einem nicht dargestellten Anhängerfahrgestell verbunden ist.

An der Zugstange 2 ist im Bereich zwischen der Zugkugelkupplung 1 und dem Zugstangenführungsstück 3 ein vorderer Anschlag 4 befestigt, der radial über die Zugstange 2 vorsteht. Zwischen diesem Anschlag 4 und dem Zugstangenführungsstück 3 ist eine Federeinrichtung 5 in der Form einer Druckfeder angeordnet, welche die Zugstange 2 umgibt und sich mit ihrem vorderen Ende am Anschlag 4 und mit ihrem hinteren Ende am Zugstangenführungsstück 3 abstützt.

Am hinteren Ende der Zugstange 2 ist ein hinterer Anschlag 6 befestigt, der radial über die Zugstange 2 vorsteht. Zwischen dem hinteren Anschlag 6 und dem hinteren Ende des Zugstangenführungsstück 3 ist eine hintere Feder 7 angeordnet, welche die Zugstange 2 umgibt und sich mit ihrem hinteren Ende am Anschlag 6 und mit ihrem vorderen Ende am Zugstangenführungsstück 3 abstützt.

Wie aus Figur 2 ersichtlich, verschiebt sich bei einem Bremsvorgang die Zugstange 2 aufgrund der Masseträgheit des Fahrzeuganhängers, welche das Zugstangenführungsstück 3 nach vorne drückt, relativ zum Zugstangenführungsstück 3 und gegen die Druckkraft der Federeinrichtung 5 nach hinten, wobei sich der Abstand zwischen dem vorderen Anschlag 4 und dem Zugstangenführungsstück 3 verringert und die Federeinrichtung 5 entsprechend zusammengedrückt wird. Der hintere Endbereich der Zugstange 2 ragt entsprechend weiter nach hinten aus dem Zugstangenführungsstück 3 hinaus.

Die hierbei auftretende Relativverschiebung zwischen Zugstange 2 und Zugstangenführungsstück 3 wird mittels einer Wegmesseinrichtung 8 gemessen. Die Wegmesseinrichtung 8 weist hierzu einen Stab 9 auf, der an seinem vorderen Ende am vorderen Anschlag 4 befestigt ist. Der Stab 9 verläuft parallel zur Zugstange 2 nach hinten und wirkt mit einer Stabpositionserfassungseinrichtung 10 zusammen, die auf dem Zugstangenführungsstück 2 befestigt ist.

Wird die Zugstange 2 bei einem Bremsvorgang relativ zum Zugstangenführungsstück 3 nach hinten verschoben, wie aus Figur 2 ersichtlich, bewegt sich der Stab 9 mit der Zugstange 2 mit, so dass sich auch die Relativposition des Stabs 9 zur Stabpositionserfassungseinrichtung entsprechend verschiebt. Die Wegmesseinrichtung 8 misst diese Verschiebung und sendet ein entsprechendes elektrisches Signal an eine elektrische Steuereinrichtung 11, welche die elektrischen Signale auswertet und entsprechende Steuersignale an eine nicht dargestellte Betätigungseinrichtung zur Betätigung der Radbremsen abgibt. Bei den Radbremsen kann es sich beispielsweise um elektrisch oder hydraulisch betätigte Radbremsen handeln.

Wird das Zugfahrzeug relativ zum Kraftfahrzeuganhänger beschleunigt, wird die Zugstange 2 aus dem Zugstangenführungsstück 3 nach vorne ausgezogen. Die elektrische Steuereinrichtung 11 erkennt dies über die Wegmesseinrichtung 8 und gibt Steuersignale aus, welche die Radbremsen lösen.

Bei einem derartigen Ausziehvorgang wird die hintere Feder 7 zusammengedrückt und die vordere Federeinrichtung 5 entspannt. Dies vermeidet ein ruckartiges Übertragen der Auszugkräfte auf den Kraftfahrzeuganhänger. Die hintere Feder 7 ist jedoch optional und könnte auch durch ein Dämpfungselement, beispielsweise in der Form eines Gummipuffers, ersetzt werden.

Die Figuren 3 und 4 zeigen die Auflaufbremseinrichtung von Figur 1 von hinten, wobei jedoch ein zusätzliches Deichselgehäuseteil 12 eingezeichnet ist, das in den Figuren 1 und 2 lediglich der Übersichtlichkeit halber weggelassen worden ist. Das Deichselgehäuseteil 12 ist stationär relativ zum Zugstangenführungsstück 3 angeordnet und kann mit diesem fest verbunden sein. Wie ersichtlich, hat das Deichselgehäuseteil 12 im Querschnitt die Form eines umgekehrten "U" und erstreckt sich über das hintere Ende der Zugstange 2, d.h. über den hinteren Anschlag 6, nach vorne, so dass das Zugstangenführungsstück 3 und die Wegmesseinrichtung 8 von dem Deichselgehäuseteil 12 abgedeckt werden.

Wie ersichtlich, ist die Zugstange 2 innerhalb des Zugstangenführungsstücks 3 und damit auch innerhalb des Deichselgehäuseteils 12 um seine Längsachse innerhalb gewisser Grenzen drehbar. Die Drehbegrenzung erfolgt bei dem gezeigten Ausführungsbeispiel mittels des hinteren Anschlags 6, der, wie aus den Figuren 3 und 4 ersichtlich, etwas weniger breit als der Abstand zwischen den beiden parallelen Wänden des Deichselgehäuseteils 12 ausgeführt ist, so dass zwischen dem Anschlag 6 und der Innenseite des Deichselgehäuseteils 12 beidseitig ein Zwischenraum 13 vorhanden ist, wie aus Figur 3 ersichtlich. Die Außenkontur des hinteren Anschlags 6 hat in der Darstellung von Figur 3 ebenfalls die Form eines umgekehrten "U". Die Zugstange 2 kann daher zusammen mit dem hinteren Anschlag 6 so weit um seine Längsachse 14 gedreht werden, bis der Anschlag 6 an einer der Seitenwände des Deichselgehäuseteils 12 anschlägt, siehe Figur 4.

Zusätzlich oder alternativ kann auch der vordere Anschlag 4 in gleicher Weise geformt sein, wie dies anhand der Figuren 3 und 4 im Zusammenhang mit dem hinteren Anschlag 6 gezeigt ist, so dass auch der vordere Anschlag 4 zur Drehbegrenzung der Zugstange 2 innerhalb des Deichselgehäuseteils 12 dienen kann.

Der Verschiebeweg, den der Stab 9 bei einer Drehung der Zugstange 2 um ihre Längsachse relativ zur Stabpositionserfassungsvorrichtung 10 ausführt, ist klein gegenüber dem Verschiebeweg, den die Zugstange 2 in ihrer Längsrichtung bei einem Brems- oder Beschleunigungsvorgang ausführt. Die elektrische Steuereinrichtung 11 kann daher ohne weiteres derart ausgeführt sein, dass bei einer reinen Verdrehung der Zugstange 2 um ihre Längsachse 14 keine Steuersignale zur Betätigung der Radbremsen ausgegeben werden.

## Patentansprüche

1. Auflaufbremsanlage für Kraftfahrzeuganhänger mit einer an einem Zugfahrzeug ankuppelbaren Zugstange (2), einem mit einem Anhängerfahrgestell verbundenen Zugstangenführungsstück (3), in dem die Zugstange (2) längs verschiebbar geführt ist, und einer zwischen der Zugstange (2) und dem Zugstangenführungsstück (3) wirkenden Federeinrichtung (5) zur federnden Abstützung der Zugstange (2) am Zugstangenführungsstück (3), **dadurch gekennzeichnet, dass** zwischen der Zugstange (2) und dem Zugstangenführungsstück (3) eine Wegmesseinrichtung (8) vorgesehen ist, welche die bei einem Bremsvorgang auftretende Relativverschiebung zwischen Zugstange (2) und Zugstangenführungsstück (3) erfasst und mit einer elektrischen Steuereinrichtung (11) zum Betätigen der Radbremsen in Abhängigkeit der Relativverschiebung verbunden ist.

2. Auflaufbremsanlage nach Anspruch 1, **dadurch gekennzeichnet, dass** die Wegmesseinrichtung (8) einerseits an einem Zugstangen-Anschlag (4), an dem die Federeinrichtung (5) abgestützt ist, und andererseits am Zugstangenführungsstück (3) befestigt ist.

3. Auflaufbremsanlage nach Anspruch 1 oder 2, **dadurch gekennzeichnet, dass** die Wegmesseinrichtung (8) einen an der Zugstange (2) befestigten Stab (9) und eine am Zugstangenführungsstück (3) befestigte Stabpositionserfassungseinrichtung (10) umfasst.

4. Auflaufbremsanlage nach einem der vorhergehenden Ansprüche, **dadurch gekennzeichnet, dass** die Zugstange (2) im Zugstangenführungsstück (3) innerhalb bestimmter Grenzen drehbar geführt ist.

5. Auflaufbremsanlage nach Anspruch 4, **dadurch gekennzeichnet, dass** an der Zugstange (2) im Bereich hinter dem Zugstangenführungsstück (3) ein hinterer Anschlag (6) zur Abstützung einer Feder (7) befestigt ist, die zwischen dem Zugstangenführungsstück (3) und dem hinteren Anschlag (6) angeordnet ist, wobei der hintere Anschlag (6) mit einem relativ zum Zugstangenführungsstück (3) feststehenden Deichselgehäuseteil (12) zur Begrenzung der Drehung der Zugstange (2) zusammenwirkt.
